# EUROPEAN PATENT APPLICATION

(11) **EP 0 568 943 A1**
(43) Date of publication of application: **10.11.1993**
(21) Application number: 93107095.7
(22) Date of filing: 30.04.1993
(51) Int. Cl.: F21V 7/22, G02B 1/10

(54) **Coated aluminum material having improved reflectivity**

(30) Priority: 06.05.1992 US 878928
(71) Applicant: ALUMINUM COMPANY OF AMERICA, Alcoa Center, Pennsylvania 15069-0001 (US)
(72) Inventor: Mozelewski, Frank A., Alcoa Center, Pennsylvania 15069-0001 (US); Balaba, Willy M., Alcoa Center, Pennsylvania 15069-0001 (US); Jensen, Craig L., Alcoa Center, Pennsylvania 15069-0001 (US)
(74) Representative: Baillie, Iain Cameron

(57) **Abstract**

Coated aluminum material including a base layer of aluminum or an aluminum alloy; a gel film overlying the base layer; and a reflector layer overlying the gel film. The gel film is preferably made by curing a siloxane sol. The reflector layer preferably includes a first silica layer; an aluminum layer; a second silica layer; and a titania layer having a higher index of refraction than the second silica layer. The gel film reduces roughness of the base layer and improves reflectivity.

## Description

The present invention relates to metal sheet material used in the reflector systems of electric lighting fixtures.

Specular aluminum sheet material has long been sold for use in the reflector systems of electric lighting fixtures. Such specular sheet material generally has a total reflectance of about 87% or more. There still remains a need to improve the total reflectance of specular aluminum sheet material in order to increase efficiency of lighting fixtures and to reduce their consumption of electricity.

Pankin U.S. Patent 4,562,517 discloses a method for improving the efficiency of lighting fixtures by providing reflectors coated with a very thin film of silver covered by a polymer. Such reflectors perform adequately for awhile, but they are subject to delamination over long periods of time.

The present invention concerns a method for improving the total reflectance of aluminum sheet material, and a gel film coating for aluminum sheet material to improve the reflectivity of a reflector layer overlying the gel film.

Additional advantages of the invention will be apparent from the following detailed description.

In accordance with the invention, there is provided coated metal sheet material having improved reflectivity. The material preferably comprises a base layer of aluminum or an aluminum alloy, a gel film overlying the base layer and a reflector layer overlying the gel film. Surprisingly, we have found that reflectivity can be improved by applying a gel film to reduce surface roughness.

The aluminum sheet material is generally an alloy of the AA1000, AA3000 or AA5000 series. The sheet material ordinarily has a thickness of about 500-800 microns. Prior to treatment in accordance with the invention, the sheet has average surface roughness of greater than about 20 nm and usually about 40-50 nm.

Surface roughness of the sheet material is reduced by application of a gel film which may comprise a polysiloxane, titania gel, alumina gel or an alkali metal silicate. A polysiloxane gel film is particularly preferred. The alkali metal silicate is preferably sodium silicate. The film is initially applied to the sheet material as a sol which is then converted to a gel film, preferably by heating. Alternatively, other sol-gel conversion techniques, such as evaporation or polymerization catalyzed by addition of an alkali, may be utilized.

A solution is prepared by dissolving a siloxane having the formula YₙSi(OR)₄₋ₙ wherein Y is a nonhydrolyzable monovalent organic group, R is an alkyl, aryl, alkaryl or aralkyl group and n is 0-3. The solvent is preferably a mixture of alcohol and water. More preferably, n is 1 or 2 and R is a C₁-C₄ alkyl group. The Y group is preferably phenyl. Phenyltrimethoxysilane was used in one preferred embodiment of the invention.

The solution is acidified by addition of acetic acid and then heated to form a sol comprising an oligomeric siloxane. A film of the sol is applied to the base layer and converted to a gel by heating to a temperature of about 105°C. The sol may be applied by spin coating or dip coating. After the gel film is cured, surface roughness of the sheet material is reduced to less than about 20 nm. The gel film may have a thickness of approximately 500-5000Å.

Alternatively, the sol film may be applied to the sheet material as a siloxane polymer solution. Two suitable siloxane polymers are poly(dimethylsiloxane) and polymethylsilsesquioxane. Evaporation of the solvent from the solution leaves a gel film.

The gel-coated sheet material is rendered reflective by successively applying coatings of silica, metal, silica and titania. The first silica layer may have a thickness of about 200-2000Å and is about 500Å thick is one preferred embodiment. The metal layer is preferably aluminum. The aluminum layer has a total thickness of about 500-2000Å and is about 1000Å thick in a preferred embodiment. A second silica layer is applied over the aluminum layer to a total thickness of about 500-2000Å, preferably about 700Å. Finally, titania is applied over the silica to a thickness of about 200-2000Å, preferably about 450Å. The gel film and reflector layer together have a total thickness of approximately 3150-7650Å.

The silica, metal, silica and titania layers are all applied by sputtering in the particularly preferred embodiment described herein. Alternatively, these layers may be applied by evaporation, chemical vapor deposition or other preferred coating techniques.

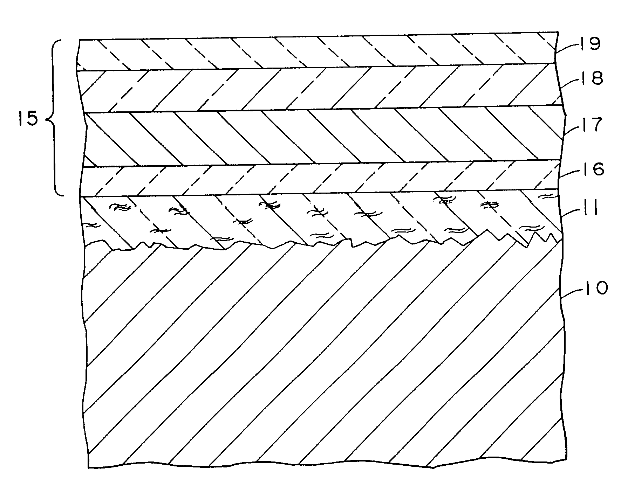

The sole Figure is a schematic cross-sectional view of a coated aluminum alloy sheet made in accordance with the present invention.

### Example

A sheet of aluminum 5657 alloy (AA series) had an initial surface roughness of about 40-50 nm. A 20 wt.% solution of phenyltrimethoxysilane dissolved in 95% isopropanol and 5% water was acidified with glacial acetic acid to produce a pH of about 4.5. The acidified solution was heated for 5 hours at 80°C. to form a sol containing siloxane oligomers. The sol was then coated onto the aluminum sheet to form a thin sol film. The sheet material was then heated to a temperature of about 105°C. to convert the sol to a gel. Average surface roughness of the aluminum alloy sheet covered with the gel film was reduced to less than about 20 nm.

A reflective coating stack was applied over the gel film by successively sputtering layers of silica, aluminum, silica and titania. The first silica layer had a thickness of about 500Å, and it improved adhesion of the aluminum layer to the gel film. The aluminum layer was about 1000Å thick. The second silica layer applied over the aluminum was transparent, with a thickness of about 700Å. The titania layer applied over the second silica layer was transparent with a thickness of about 450Å. The titania layer had a higher index of refraction than the second silica layer.

Before treatment as described above, the sheet had distinctness of image (D/I) value of about 95% and total reflectance of about 30%. Total reflectance readings are obtained using an integrating sphere reflectometer such as a Diano Corp. TR-1 or Technidyne TR-2 in accordance with ASTM D-78. Distinctness of image values is measured on a Dori-Gon gloss meter in accordance with ASTM E430 wherein a beam of light is directed onto the sheet surface of an incident angle of 30°, and the relative amount of light reflected at 10 minutes from the specular angle is used to calculate a D/I value.

Aluminum alloy sheet material coated in accordance with the procedure described above had an improved D/I value of about 97%. Total reflectance was also increased to about 96%.

Referring to the Figure, there is shown an AA5657 aluminum alloy sheet 10 provided with gel and reflector layer coatings in accordance with the present invention. The sheet 10 has a thickness of about 25 mils (635 microns). Before coating with the gel layer 11, the sheet 10 had average surface roughness of about 40-50 nm. The gel layer 11 has a total thickness of approximately 1000Å (100 nm).

The reflector layer 15 includes a first silica layer 16 having a thickness of approximately 500Å; an aluminum layer 17 having a thickness of approximately 1000Å; a second silica layer 18 having a thickness of approximately 700Å; and a titania layer 19 having a thickness of approximately 450Å. Total thickness of the reflector layer 15 is about 2650Å. All four layers 16, 17, 18 and 19 are applied by sputtering.

While certain preferred embodiments of the invention have been described for purposes of illustration, it will be appreciated that numerous modifications, variations and other embodiments are possible. All such apparent modifications, variations and embodiments are to be regarded as being within the spirit and scope of the invention.

## Claims

1. Coated aluminum material having improved reflectivity and comprising:
(a) a base layer of aluminum or an aluminum alloy;
(b) a gel film overlying said base layer; and
(c) a reflector layer overlying said gel film.

2. The aluminum material in accordance with claim 1, wherein said base layer is defined by one of the following:
(a) it comprises a sheet of an AA1000, AA3000 or AA5000 series aluminum alloy; or
(b) it comprises a sheet of an aluminum alloy having greater than about 20 nm average surface roughness prior to application of said gel film.

3. The aluminum material in accordance with claim 1, wherein said gel film comprises a polysiloxane, titania gel, alumina gel or alkali metal silicate.

4. The aluminum material in accordance with any one of the preceding claims, wherein said gel film comprises a polymerization product of a siloxane having the formula YₙSi(OR)₄₋ₙ wherein:
(a) Y is a nonhydrolyzable monovalent organic group, R is an alkyl, aryl, alkaryl or aralkyl group and n is 0-3; or
(b) in the formula of (a) above, n is 1 or 2 and R is a C₁-C₄ alkyl group; or
(c) in the formula of (a) above, Y is phenyl, n is 1 and R is a methyl group.

5. The aluminum material in accordance with any one of the preceding claims, wherein said gel film has thickness of about 500-5000Å.

6. The aluminum material in accordance with any one of the preceding claims, wherein said reflector layer is defined by one or more of the following features:
(a) it comprises a metal layer;
(b) it has an average thickness of less than about 8000Å;
(c) it comprises:
(i) a first silica layer overlying said gel film;
(ii) an aluminum layer overlying said first silica layer;
(iii) a second silica layer overlying said aluminum layer; and
(iv) a titania layer overlying said second silica layer;
(d) in the reflector layer of (c), said first silica layer has a thickness of about 200-2000Å; said aluminum layer has a thickness of about 500-2000Å; said second silica layer has a thickness of about 500-2000Å; and said titania layer has a thickness of about 200-2000Å;
(e) in the reflector layer of (c), said titania layer has a higher index of refraction than said second silica layer.

7. A method for producing reflective aluminum material comprising:
(a) providing a base layer comprising aluminum or an aluminum alloy;
(b) applying a sol film to said base layer;
(c) curing said sol film to a gel film; and
(d) applying a reflector layer over the cured gel film, thereby forming an aluminum material having improved reflectivity.

8. The method in accordance with claim 7, having one or more of the following features:
(a) said aluminum material has less surface roughness after step (c) than before step (b);
(b) said sol film comprises an oligomeric siloxane;
(c) said gel film has a thickness of about 500-5000Å and comprises a polysiloxane.

9. The method in accordance with claim 7 or 8, wherein step (d) comprises:
(i) coating a first silica layer over said gel film;
(ii) coating an aluminum layer over said first silica layer;
(iii) coating a second silica layer over said aluminum layer; and
(iv) coating a titania layer over said second silica layer;
wherein preferably steps (i), (ii), (iii) and (iv) are each performed by sputtering.

10. Coated metal sheet material having improved reflectivity and comprising:
(a) a base layer comprising a metal sheet having a thickness of at least about 500 microns;
(b) a gel film overlying said base layer, said gel film having a thickness of about 500-5000Å and comprising a polysiloxane; and
(c) a reflector layer overlying said gel film, said reflector layer comprising a layer of aluminum having a thickness of about 500-2000Å.
